# EUROPEAN PATENT SPECIFICATION

(11) **EP 0 531 454 B1**
(45) Date of publication and mention of the grant of the patent: **12.02.1997**
(21) Application number: 91913306.6
(22) Date of filing: 17.05.1991
(51) Int. Cl.: G21B 1/00

(54) **DISTRIBUTED DEUTERIUM-LITHIUM ENERGY APPARATUS**
ENERGIE ERZEUGENDE VORRICHTUNG MIT VERTEILTEM DEUTERIUM-LITHIUM
APPAREIL DE PRODUCTION D'ENERGIE A PARTIR DE DEUTERIUM-LITHIUM REPARTI

(30) Priority: 25.05.1990 US 530036
(43) Date of publication of application: 17.03.1993
(73) Proprietor: DREXLER, Jerome, Los Altos Hills, CA 94022 (US)
(72) Inventor: DREXLER, Jerome, Los Altos Hills, CA 94022 (US)
(74) Representative: Kahler, Kurt, Dipl.-Ing.
(86) International application number: US9103503
(87) International publication number: WO9119294

(56) References cited:
- EP-A- 0 069 555
- WO-A-90/15415
- WO-A-91/02359
- JP-A- 5 985 878
- US-A- 2 139 529
- US-A- 3 080 304
- US-A- 3 701 632
- US-A- 3 920 534
- US-A- 3 930 890
- US-A- 4 146 446
- US-A- 4 202 752
- FUSION TECHNOLOGY vol. 16, no. 2, September 1989, La Grange, Il., US, pp. 254-259, XP47408; V.C. ROGERS et al.: 'Isotopic Hydrogen Fusion in Metals'
- FUSION TECHNOLOGY vol. 16, no. 2, September 1989, La Grange Park, Il., US, pp. 260-262, XP47409; Y. OKA et al.: 'Electrochemically induced Deuterium-Tritium fusion power reactor - Preliminary design of a reactor system'
- J. ELECTROANAL. CHEM., vol. 261, 10 April 1989, pp. 301-308; M. FLEISCHMANN et al.: "Electrochemically induced nuclear fusion of deuterium"
- NATURE, vol. 344, 29 March 1990, pp. 401-405; M.H. SALAMON et al.: "Limits on the emission of neutrons, y-rays, electrons and protons from Pons/Fleischmann electrolytic cells"
- NATURE, vol. 342, 23 November 1989, pp. 375-384; D.E. WILLIAMS et al.: "Upper bounds on 'cold fusion' in electrolytic cells"
- NATURE, vol. 340, 17 August 1989, pp. 525-530; N.S. LEWIS et al.: "Searches for low-temperature nuclear fusion of deuterium in palladium"

## Description

### Technical Field

This invention relates to an apparatus and a method for accumulating deuterium and lithium ions in a lattice for stimulating production of thermal energy.

### Background Art

Electrically charged particles such as bare electrons or protons or muons are known to be Fermions and to obey Fermi-Dirac statistics. Two like elementary charged particles, such as two protons, have like electrical charges so that they tend to repel one another. Further, two like Fermions obey the Pauli exclusion principle so that, if the particles possess identical quantum numbers, the two identical particles will not occupy the same region of space at the same time, even if the identical particles have no net electrical charge. The combination of two Fermions in a nucleus, such as a neutron and a proton, which together form the nucleus of a deuterium atom or ion, behaves as another type of particle, called a Boson, which obeys Bose-Einstein statistics rather than Fermi-Dirac statistics. This has been discussed recently by K. Birgitta Whaley, a theoretical chemist speaking at the Dallas meeting of the American Chemical Society in April, 1989.

Particles that obey Bose-Einstein statistics ("Bosons") tend to accumulate in the same region of space under some circumstances, in preference to staying apart as like Fermions tend to do. This tendency of Bosons to accumulate in the same region of space is indicated by a quantum thermodynamic expression for the pressure in a system of Bosons developed and discussed in Statistical Physics by L.D. Landau and E.M. Lifshitz, Addison-Wesley Co., 1958, p. 159. In this expression for pressure, the pressure developed by a system of Bosons is less than the pressure developed by a system of particles that are neither Fermions nor Bosons at the same concentration and temperature. This suggests that the Boson particles experience a modest attraction for one another that has its origin in quantum mechanical forces.

Whaley has speculated that, because of the quantum effect features of particles such as deuterium nuclei, the natural repulsion between two such nuclei can be blocked inside a crystal so that the deuterium ions are not held apart by the combination of strong coulomb forces and quantum forces. Some workers speculate that, because deuterium nuclei might be brought very close together inside a crystal, the deuterium nuclei could combine in a fusion process at enhanced rates, as compared to the infinitesimal rates observed at ordinary fluid densities for deuterium nuclei.

Lithium ions have been widely used in the electrolyte added to heavy water in certain experiments involving palladium by Pons and Fleischmann (see J. Electroanal. Chem. vol. 261, pp. 301-308, 10-4-1989) and many other researchers. The electrolyte used most commonly is LiOD, wherein most or all of the hydrogen in LiOH is replaced by deuterium. Most reports of generation of heat by these experiments indicated that the LiOD electrolyte had been used. In March, 1990, several physicists speculated that the excess enthalpy generated may come from the reaction

Li⁶ + D → 2 He⁴ + 22.4 MeV.

The excess energy of 22.4 MeV is carried by the kinetic energy of the two helium nuclei, and is dissipated in the host lattice used, which is usually palladium.

It is known that lithium reacts with hydrogen to form LiH, in which the hydrogen acts as a negative ion. This is evidenced by the fact that when this substance is electrolyzed the hydrogen is liberated at the anode. Therefore, it would be expected that the close proximity of lithium-6 ions and deuterium ions within the palladium lattice could lead to a strong chemical bond with the deuterium ions being negative and lithium-6 ions being positive. In contrast, in the case of two deuterons the coulomb force tends to push them apart.

It is known that some metals will readily accept substantial amounts of hydrogen or its isotopes into the interior of such metals and that such metals can be used to filter hydrogen isotopes from a stream of other substances. In U.S. Pat. No. 4,774,065, granted September 27, 1988 to R. Penzhorne et al., it is disclosed that a hot palladium membrane will filter tritium and deuterium from CO molecules. The palladium membrane disclosed by Penzhorne et al. was used to filter exhaust gas from a fusion reactor.

However, even where a metal such as palladium is chosen as an accumulation structure ("accumulator") for deuterium ions ("deuterons") or lithium ions ("lithons"), those deuterium ions or lithium ions that pick up electrons or other negatively charged particles at the accumulator will no longer behave as Bosons and may not manifest the desirable feature of high density accumulation within the palladium interior or lattice. Also, the lithons that pick up an electron at the palladium cathode in the prior art can deposit as lithium atoms on the palladium which can interfere with the fusion process.

A number of researchers have reported excess power or excess energy generation in an electrolysis cell similar to that used in the Fleischmann-Pons cell and publicly announced March 23, 1989. These cells comprise a palladium cathode, usually a platinum helical anode, high purity heavy water, and a Li⁶OD electrolyte. In these cells, deuterium gas and oxygen gas are generated by the electrolysis process. The input power is the current flow through the cell multiplied by the voltage across the cell and the output power is in the form of thermal energy.

Owing to the use of electrolytic action to make the cell operate, deposits are built up on the palladium cathode from materials from the anode and also from the lithium in the electrolyte. Such deposits alter the functioning of the cathode as an accumulator of deuterons and lithons. Dendrites may also build up on the cathode, leading to high local electric fields and reactions leading to the production of the hydrogen isotope tritium.

It is known from the prior art that ordinary water containing ions can have the ions removed from the water by passing the water through a bed of resin particulates that are sometimes called ion exchange resins. This is the conventional way of producing deionized water for industrial use. This is an example of how ions may be removed from water without the use of an electrolytic cell.

The object of this invention is to provide a method and an apparatus to facilitate lithium-6 ion and deuterium ion fusion without the use of electrodes, which are costly, introduce contamination, and place restrictions on scaling up the apparatus to very high power generation.

The apparatus imparts a substantial and uniform kinetic energy to lithium ions and deuterium ions for combining in palladium without the use of applied voltage sources.

### Summary of the Invention

This object is met by an apparatus as defined in claim 1 and a method as defined in claim 12 that produce deuterium and lithium ions in a liquid containing high purity heavy water and dissolved deuterium gas. The apparatus enhances deuterium ion and lithium ion formation by use of an LiOD electrolyte containing a substantial amount of lithium-6.

The liquid is placed in a horizontal tube made of a chemically passive material such as glass, ceramic, or plastic. The tube is designed to prevent light water in the atmosphere from entering. The tube contains particulates of a material that is permeable to deuterium ions and lithium-6 ions, such as palladium or an alloy of palladium. The tube is formed into a loop or closed helix system. Porous or perforated baffles are used to contain the palladium particulates and prevent them from simply moving with the heavy water. The baffles are porous sheets or non-porous perforated sheets with holes smaller than the particulates so the particulates are contained between two such baffles. The baffles thus divide the tube or helix into a number of sections. In one embodiment, the palladium particulates are piled one on the other just as sand would fill the tube. In another embodiment, the palladium particulates are mixed with ceramic or silicon dioxide particulates, so, in general, the palladium particulates are not necessarily in contact with one another. In a third embodiment, the palladium particulates are coated with a water-permeable material or are each inserted into a cap so that half of the particulate is exposed and the other half is hidden. In a fourth embodiment, the particulates are bonded to polymer sheets on both sides or one side like sandpaper and rolled up and inserted into the tube. In a fifth embodiment, the porous or perforated baffles containing palladium act as ion accumulators. In a sixth embodiment, a random distribution of palladium foil acts as a distributed ion accumulator.

The ionized heavy water with dissolved deuterium gas and containing both lithium-6 and deuterium ions, is pumped through the tube, thereby contacting and passing over the palladium accumulator structure. The ionized heavy water may flow over the palladium accumulator as a laminar flow or a turbulent flow to achieve optimum performance. The deuterium ions and lithium ions both travel at the same velocity, which may be controlled by the pump pressure. The ion velocities can be equal to or thousands of times higher than those in the Fleischmann-Pons cell. When a laminar flow is used, the deuterium and lithium ion velocity and kinetic energy distribution would be relatively small. Both the deuterium and lithium-6 ions will be absorbed into the ion permeable palladium accumulator structure. When palladium particulates are used, the particulates charge up from the absorbed positive ions, the OD⁻ radical ions will be attracted to them and through surface contact tend to balance out the charges permitting more and more of the two types of ions to be absorbed by the particulates. By this means, the palladium particulates become deuterated and may be referred to as β palladium. This process may take place during operation of this tubular energy cell or the particulates may be pre-charged in another cell first. Preferably, at least 65 percent of the interstitial sites in the palladium should be filled with deuterium. The Li⁶ ions and the deuterium ions are Bosons. Thus, they need not satisfy the Pauli exclusion principle inside the palladium lattice and can come very close together, enhancing the chances they will fuse. Fusing of ions within the palladium creates excess energy in the form of thermal energy that may be removed by the liquid. An external heat exchanger may capture this energy. Since lithium-6 and deuterium are consumed during the process of producing the thermal energy they must be replenished for the process to continue. A preferred way of replenishing then is by adding Li⁶OD and deuterium gas, D₂. The container is a system such as a loop or helix to permit continuous cycling of the ionized heavy water again and again to absorb the maximum of ions and to reuse the kinetic energy of the pumped water flow and the thermal energy added to the heavy water. It may also be a linear system for some applications.

### Brief Description of the Drawings

Fig. 1 is a simplified perspective view of a distributed reaction apparatus in accord with the present invention.

Fig. 2 is a sectional view of the apparatus of Fig. 1 taken along lines 2-2.

Figs. 3 and 4 are top views of passive baffles or ion accumulator baffles in accord with the present invention.

Fig. 5 is a perspective view of a slurry accumulator structure in accord with the present invention.

Figs. 6 and 7 are sectional views of insulated particulate accumulator structures in accord with the present invention.

Fig. 8 is a sectional view of a helical accumulator structure.

Fig. 9 a perspective view of small spiral accumulator structures.

Fig. 10 is a helical containment vessel for thermal reactions in accord with the present invention.

### Best Mode for Carrying Out the Invention

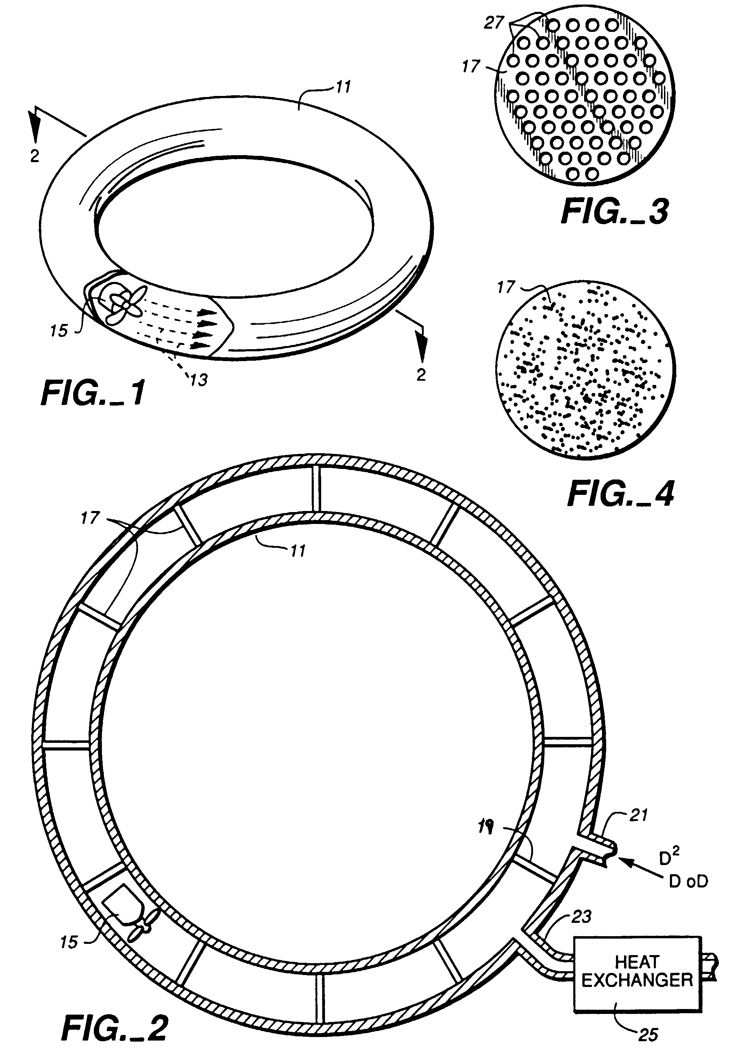

With reference to Fig. 1, a toroidal containment vessel 11 is shown housing a circulating fluid indicated by arrows 13. Containment vessel 11 is designed to prevent light water in the atmosphere from entering it. The fluid is driven by a pump 15 within the containment vessel. The fluid is concentrated heavy water ionized by lithium deuteroxide, LiOD. Deuterium gas is bubbled into the heavy water and dissolved in it. The D-D gas provides a source of negative deuterium ions. In order to create thermal energy in accord with the present invention, it is necessary to pack lithium and deuterium into a tight crystal lattice available in a palladium structure known as an accumulator. The packing occurs over a period of time in which the moving ionized fluid comes into contact with the accumulator structure with lithium ions and deuterium ions packing lattice interstices over a number of hours. The affinity of negative deuterium ions for positive lithium ions allows the ions to come very close together, closer than the usual distance where coulomb repulsion would prevent further approach. In this situation, there is a probability of lithium and deuterium nuclei fusing, which ultimately happens, yielding energetic helium-4. The helium quickly dissipates its energy to the surrounding environment which yields thermal energy.

There are various possibilities for accumulator structures. With reference to Fig. 2, the toroidal containment vessel 11 is seen to have a plurality of baffles 17. All of the baffles are porous, except for one, baffle 19, which may be open or closed, which serves to separate an inlet port 21 from an outlet port 23. Pump 15 serves to establish flow from the inlet port out to the outlet port. With a pump, kinetic energy may be imparted to ions so that flow rates may exceed those in a Fleischmann-Pons electrochemical cell. The fluid circulates around the toroid until its temperature rises to the desired level then baffle 19 may be closed. Once a fluid reaches the desired temperature, the fluid is recirculated after passing through a heat exchanger 25.

Alternative baffle structures are shown in Figs. 3 and 4. In Fig. 3, the baffle 17 has an array of apertures 27 which have the advantage of allowing a greater fluid flow at reduced pressure. On the other hand, in the baffle structure of Fig. 4, apertures are pinhole sized, giving rise to higher pressure in the containment vessel. The size and spacing of pinholes should be adjusted so that desired flow rates may be achieved without undue pressure. These baffles may be passive and contain accumulator components between them. They may also be active ion accumulators. In this case, the accumulator contains palladium having a thickness so that the palladium accumulator will not readily rupture.

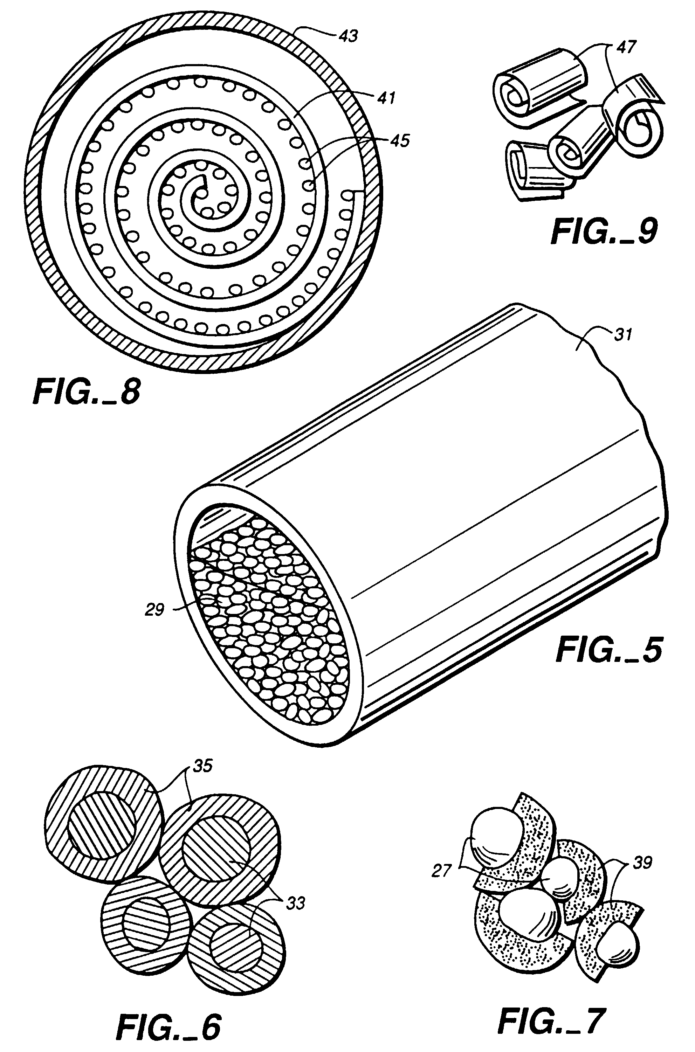

Fig. 5 shows an alternate accumulator structure wherein metallic palladium particulates 29 form a slurry which is resident in the toroidal accumulator represented by section 31. The slurry has the advantage of presenting a greater surface area to the heavy water. If a slurry is used, the pinhole baffle structure previously described is used to contain the particulates. The palladium particulates are permeated by lithium and deuterium, just as the palladium baffle structures. If the heavy water flow is increased, the upper layers of the slurry, by sheer forces, exposing fresh underlayers which become permeated with lithium and deuterium. Eventually, the entire slurry becomes sufficiently permeated that fusion reactions begin to yield measurable amounts of heat. Fig. 6 shows palladium particles 33 coated with a nonconductive water porous polymer 35 which is permeable by lithium and deuterium ions. Such a polymer may be gelatin or polyvinyl alcohol. Such a coating reduces the contamination of the palladium surface and exposes the entire surface for ion accumulation. The palladium particles in either coated or uncoated form may be mixed with nonreactive ceramic particles or silicon dioxide particles. The sizes of the particles and their ratios are selected for optimum economic design, that is, maximizing the ratio of ion absorption rate to dollar investment.

In Fig. 7, the particles 37 have a partial polymer coating 39 about approximately 50% of the surface area. This provides a balance between uncoated particles and fully coated particles and may be used for economic design optimization in conjunction with other particles.

Fig. 8 shows an alternative accumulator structure wherein a polymer sheet 41 is housed in the containment structure 43. The sheet has a plurality of palladium particulates 45 adhered to the surface, in the fashion of rough sandpaper. The sandpaper-like structure is rolled into a spiral which fits into the containment structure with the center of the spiral parallel or colinear with the axis of the toroidal confinement structure. As an alternative to a single spiral occupying sections of the toroidal confinement vessel, Fig. 9 shows that small spiral strips 47 also having palladium particles adhered to one or both sides in a sandpaper-like texture, may be stuffed into the containment vessel. Figure 9 also represents rolled-up palladium foils.

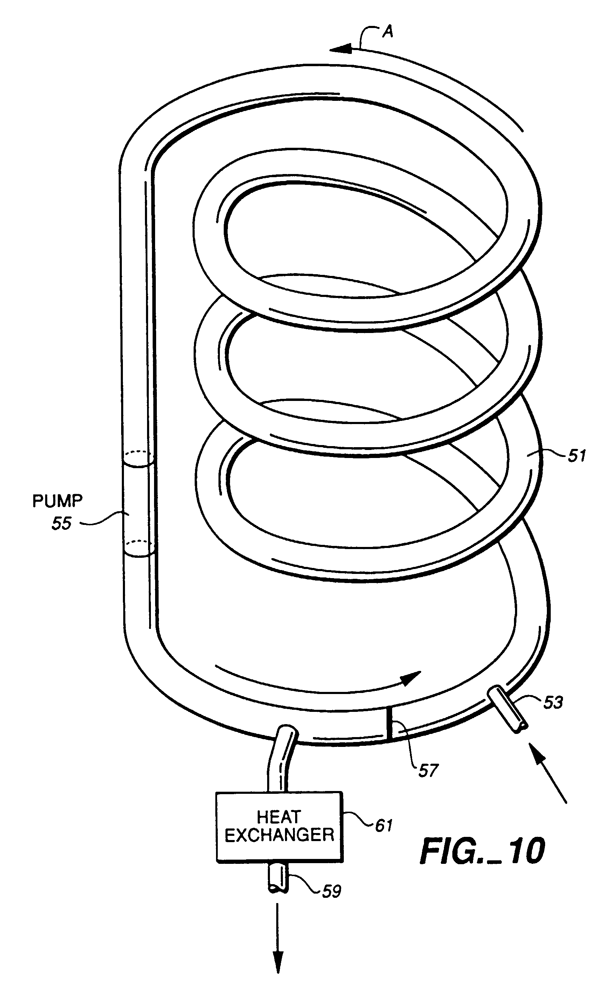

With reference to Fig. 10, a helical containment vessel 51 is shown, which is similar in construction to the apparatus shown in Figs. 1 and 2 except that an extended path is provided. Vessel 51 is designed to prevent light water in the atmosphere from entering it. The containment vessel includes an inlet 53 where primarily heavy water enters the apparatus for flow in the direction of the arrow A under the influence of a pump in the removable section 55. Both linear sections and curved sections are employed. Within the containment vessel is one or more of the palladium accumulator structures previously described including baffles, palladium particles in a slurry, coated or semicoated palladium particles or spiral sheets with palladium particles adhering to major surfaces of the sheets. A controllable baffle 57 separates inlet from outlet 59 and a heat exchanger 61 is provided to remove thermal energy once the desired reaction occurs and desired temperature is reached. The number of spiral loops and the length of the path is selected to increase the amount of power output to a desired level, while still using a single heat exchanger. In both the embodiments of Figs. 2 and 10, no electrodes are necessary in the apparatus.

Since lithium-6 and deuterium are consumed during the process of producing the thermal energy they must be replenished for the process to continue. A preferred way of replenishing them is by adding Li⁶OD and deuterium gas, D₂. An alternative way of adding D₂ would be to use a section of the embodiments shown in Figs. 2 and 10 for an electrolytic cell that produces D₂ from the heavy water for replenishment and permits the oxygen to escape into the atmosphere.

## Claims

1. An electrodeless apparatus for accumulating deuterium and lithium ions in a lattice for stimulating reactions productive of thermal energy comprising,
a closed loop container (11, 43, 51) containing high purity liquid heavy water and containing dissolved D₂ and an electrolyte containing LiOD, the solution of LiOD and dissolved D₂ yielding lithium ions and molecular deuterium;
a plurality of spaced apart ion accumulator baffle structures (17, 29, 33, 37, 45, 47) disposed in the container (11, 43, 51), each capable of absorbing molecular or atomic deuterium and lithium ions into its lattice, the plurality of baffle structures disposed across the container;
a pump means (15) associated with the closed loop for causing flow of the heavy water around the closed loop so that a flow of the heavy water passes through each baffle structure, one after the other, whereby the molecular deuterium and the lithium ions will be absorbed into the lattice of the accumulator structures (17, 29, 33, 37, 45, 47); and
heat exchanger means 25 for removing energy from the container (11, 43, 51).

2. Apparatus of claim 1,
wherein said ion accumulator structure comprises particulates (29) containing palladium.

3. Apparatus of claim 1,
wherein said ion accumulator structure comprises particulates (33) containing palladium that are mixed with particulates of ceramic or silicon dioxide.

4. Apparatus of claim 1,
wherein said ion accumulator structure comprises particulates (33) containing palladium coated with gelatin or polyvinyl alcohol (35).

5. Apparatus of claim 1,
wherein said ion accumulator structure comprises particulates (37) containing palladium which are partially covered by a polymer (39).

6. Apparatus of claim 1,
wherein said ion accumulator structure comprises particulates (45) containing palladium that are bonded to a polymer sheet (41).

7. Apparatus of claim 1,
wherein said ion accumulator structure comprises a foil (47) containing palladium.

8. Apparatus of claim 1,
wherein each said ion accumulator baffle structures comprises perforated baffles (17) containing palladium.

9. Apparatus of any of claims 1 to 8,
wherein said closed loop container (11; 51) is a hollow tube which is linear or curved.

10. Apparatus of any of claims 1 to 8,
wherein said closed loop container (11) is a toroid.

11. Apparatus of any of claims 1 to 8,
wherein said closed loop container (51) is a hollow tube formed into a helix.

12. A method of accumulating deuterium and lithium ions in a lattice for stimulating reactions productive of energy comprising the steps of:
containing high purity liquid heavy water in a closed loop container;
dissolving deuterium gas, D₂ in the heavy water;
providing an electrolyte containing LiOD in the heavy water, thereby forming an ionic substance, and
flowing the ionized heavy water around the closed loop through a plurality of ion accumulator structures formed from a material capable of absorbing both molecular or atomic deuterium and lithium-6 ions thereby packing the lattice of the accumulator with deuterium and lithium-6, with the plurality of accumulator structures disposed across the flow of heavy water so that the flow passes through each accumulator structure, one after the other.

13. The method of claim 12,
further comprising the step of choosing said ion accumulator structure material from a class of materials consisting of palladium or palladium alloy.

## Patentansprüche

1. Eine elektrodenlose Apparatur zum Akkumulieren von Deuterium- und Lithium-Ionen in einem Gitter zum Anregen von Reaktionen, die thermische Energie erzeugen, die aufweist,
einen Behälter (11, 43, 51) mit geschlossenem Kreislauf, der hochreines, flüssiges, schweres Wasser und gelöstes D2 enthält und einen Elektrolyten, der LiOD enthält, wobei die Lösung von LiOD und gelöstem D₂ Lithium-Ionen und molekulares Deuterium liefert;
eine Vielzahl von voneinander beabstandeten Ionenakkumulationsleiteinrichtungsaufbauten (17, 29, 33, 37, 45, 47), die im Behälter (11, 43, 51) angeordnet sind und von denen jeder in der Lage ist molekulare oder atomare Deuterium- und Lithium-Ionen in seinem Gitter zu absorbieren, wobei die Vielzahl von Leiteinrichtungsaufbauten über den Behälter verteilt ist;
ein Mittel (15) zum Pumpen, das dem geschlossenen Kreislauf hinzugefügt ist, um einen Fluß des schweren Wassers im geschlossenen Kreislauf herum hervorzurufen, so daß das schwere Wasser durch einen Leiteinrichtungsaufbau nach dem anderen hindurchfließt, wodurch die molekularen Deuterium- und die Lithium-Ionen in das Gitter der Akkumulatoraufbauten (17, 29, 33, 37, 45, 47) hinein absorbiert werden; und
Wärmeaustauschermittel (25) zum Entfernen von Energie aus dem Behälter (11, 43, 51).

2. Eine Apparatur nach Anspruch 1,
bei der der Ionenakkumulatoraufbau palladiumenthaltende Partikel (29) aufweist.

3. Eine Apparatur nach Anspruch 1,
bei der der Ionenakkumulatoraufbau palladiumenthaltende Partikel (33) aufweist, die mit Partikeln aus Keramik oder Siliciumdioxid gemischt sind.

4. Eine Apparatur nach Anspruch 1,
bei der der Ionenakkumulatoraufbau palladiumenthaltende Partikel (33) aufweist, die mit Gelatine oder Polyvinylalkohol (35) beschichtet sind.

5. Eine Apparatur nach Anspruch 1,
bei der der Ionenakkumulatoraufbau palladiumenthaltende Partikel (37) aufweist, die teilweise mit einem Polymer (39) bedeckt sind.

6. Eine Apparatur nach Anspruch 1,
bei der der Ionenakkumulatoraufbau palladiumenthaltende Partikel (45) aufweist, die mit einer Polymerplatte (41) verbunden sind.

7. Eine Apparatur nach Anspruch 1,
bei der der Ionenakkumulatoraufbau eine palladiumenthaltende Folie (47) aufweist.

8. Eine Apparatur nach Anspruch 1,
bei der die Ionenakkumulatorleiteinrichtungsaufbauten perforierte, palladiumenthaltende Leiteinrichtungen (17) aufweisen.

9. Eine Apparatur nach irgendeinem der Ansprüche 1 bis 8, bei der der Behälter (11; 51) mit geschlossenem Kreislauf eine hohle Röhre ist, die geradlinig oder gekrümmt ist.

10. Eine Apparatur nach irgendeinem der Ansprüche 1 bis 8, bei der der Behälter (11) mit geschlossenem Kreislauf ein Toroid ist.

11. Eine Apparatur nach irgendeinem der Ansprüche 1 bis 8, bei der der Behälter (51) mit geschlossenem Kreislauf eine Hohlröhre ist, die schraubenförmig ausgebildet ist.

12. Ein Verfahren zum Akkumulieren von Deuterium- und Lithium-Ionen in einem Gitter zum Anregen von energieerzeugenden Reaktionen, das die Schritte aufweist:
Fassen von hochreinem, flüssigem, schwerem Wasser in einem Behälter mit einem geschlossenen Kreislauf;
Auflösen von Deuteriumgas D₂ im schweren Wasser;
Vorsehen eines LiOD enthaltenden Elektrolyten im schweren Wasser, wodurch eine ionische Substanz entsteht, und
Fließenlassen des ionischen, schweren Wassers im geschlossenen Kreislauf herum durch eine Vielzahl von Ionenakkumulatoraufbauten, die aus einem Material ausgebildet sind, das es ermöglicht sowohl molekulare als auch atomare Deuterium- und Lithium-6-Ionen zu absorbieren, wodurch das Gitter des Akkumulators mit Deuterium und Lithium-6 bepackt wird, und wobei die Vielzahl von Akkumulatorenaufbauten längs des Flusses des schweren Wassers angeordnet sind, so daß der Fluß durch einen Akkumulatoraufbau nach dem anderen durchläuft.

13. Ein Verfahren nach Anspruch 12,
das weiterhin den Schritt des Auswählens des Materials des Ionenakkumulatoraufbaus aus einer Klasse von Materialien aufweist, die aus Palladium oder einer Palladiumlegierung bestehen.

## Revendications

1. Appareil dépourvu d'électrodes pour accumuler des ions deutérium et lithium dans un réseau cristallin en vue de favoriser des réactions génératrices d'énergie thermique comprenant,
un récipient en boucle fermée (11, 43, 51) contenant de l'eau lourde liquide de haute pureté et contenant du D₂ en solution et un électrolyte contenant LiOD, la solution de LiOD et le D₂ en solution donnant des ions lithium et du deutérium moléculaire;
une pluralité de structures écrans d'accumulation d'ions espacées (17, 29, 33, 37, 45, 47) disposées dans le récipient (11, 43, 51), capable chacune d'absorber du deutérium moléculaire ou atomique et des ions lithium à l'intérieur de son réseau cristallin, la pluralité de structures écrans étant disposée transversalement dans le récipient,
un moyen de pompage (15) associé à la boucle fermée pour provoquer l'écoulement d'eau lourde sur toute la longueur de la boucle fermée de manière à ce que l'eau lourde s'écoule à travers chaque structure écran, l'une après l'autre; de telle sorte que le deutérium moléculaire et les ions lithium soient absorbés dans le réseau cristallin des structures d'accumulation (17, 29, 33, 37, 45, 47); et
des moyens d'échange de chaleur (25) pour évacuer de l'énergie du récipient (11, 43, 51).

2. Appareil selon la revendication 1, dans lequel ladite structure d'accumulation d'ions comprend des corpuscules (29) contenant du palladium.

3. Appareil selon la revendication 1, dans lequel ladite structure d'accumulation d'ions comprend des corpuscules (33) contenant du palladium qui sont mélangés avec des corpuscules en matière céramique ou en dioxyde de carbone.

4. Appareil selon la revendication 1, dans lequel ladite structure d'accumulation d'ions comprend des corpuscules (33) contenant du palladium enduits de gélatine ou d'alcool polyvinylique (35).

5. Appareil selon la revendication 1, dans lequel ladite structure d'accumulation d'ions comprend des corpuscules (37) contenant du palladium qui sont en partie enduits ou recouverts d'un polymère (39).

6. Appareil selon la revendication 1, dans lequel ladite structure d'accumulation d'ions comprend des corpuscules (45) contenant du palladium qui sont liés à une feuille en polymère (41).

7. Appareil selon la revendication 1, dans lequel ladite structure d'accumulation d'ions comprend une feuille (47) contenant du palladium.

8. Appareil selon la revendication 1, dans lequel chacune desdites structures écrans d'accumulation d'ions comprend des écrans perforés (17) contenant du palladium.

9. Appareil selon l'une quelconque des revendications 1 à 8, dans lequel ledit récipient en boucle fermée (11, 51) est un tube creux qui est de forme linéaire ou incurvée.

10. Appareil selon l'une quelconque des revendications 1 à 8, dans lequel ledit récipient en boucle fermée (11) est un enroulement toroïdal.

11. Appareil selon l'une quelconque des revendications 1 à 8, dans lequel ledit récipient en boucle fermée (51) est un tube creux façonné en forme d'hélice.

12. Procédé d'accumulation d'ions deutérium et lithium dans un réseau cristallin en vue de favoriser des réactions génératrices d'énergie comprenant les étapes:
de confinement d'eau lourde liquide de haute pureté dans un récipient en boucle fermée,
de dissolution de deutérium gazeux D₂ dans l'eau lourde;
d'introduction dans l'eau lourde d'un électrolyte contenant LiOD, de manière à former une substance ionique, et
d'écoulement de l'eau lourde ionisée sur toute la longueur de la boucle fermée à travers une pluralité de structures d'accumulation d'ions formées d'un matériau capable d'absorber à la fois du deutérium moléculaire et atomique et des ions lithium-6 de manière à remplir le réseau cristallin de l'accumulateur de deutérium et de lithium-6, la pluralité de structures d'accumulation étant disposée transversalement à l'écoulement d'eau lourde de sorte que l'écoulement passe à travers chaque structure d'accumulation, l'une après l'autre.

13. Procédé selon la revendication 12, comprenant en outre l'étape de sélection dudit matériau de structure d'accumulation d'ions dans une classe de matériaux consistant en palladium et en alliages de palladium.
